(19) Europäisches Patentamt
European Patent Office
Office européen des brevets

(11) **EP 4 391 142 B1**

(12) **FASCICULE DE BREVET EUROPEEN**

(45) Date de publication et mention
de la délivrance du brevet:
**17.06.2026 Bulletin 2026/25**

(21) Numéro de dépôt: **23216398.0**

(22) Date de dépôt: **13.12.2023**

(51) Classification Internationale des Brevets (IPC):
**H01M 10/42** *(2006.01)* **G01R 31/36** *(2020.01)*

(52) Classification Coopérative des Brevets (CPC):
**H01M 10/42;** H01M 2200/20

(54) **DISPOSITIF ET PROCÉDÉ DE DÉTECTION D'UNE DÉFORMATION D'UN EMBALLAGE D'UNE CELLULE DE BATTERIE**

VORRICHTUNG UND VERFAHREN ZUR ERKENNUNG EINER VERFORMUNG EINER VERPACKUNG EINER BATTERIEZELLE

DEVICE AND METHOD FOR DETECTING A DEFORMATION OF A PACKAGING OF A BATTERY CELL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **19.12.2022 FR 2213731**

(43) Date de publication de la demande:
**26.06.2024 Bulletin 2024/26**

(73) Titulaire: **Commissariat à l'Energie Atomique et aux Energies Alternatives**
**75015 Paris (FR)**

(72) Inventeur: **RANIERI, Marco**
**38054 GRENOBLE CEDEX 09 (FR)**

(74) Mandataire: **Hautier IP**
**20, rue de la Liberté**
**06000 Nice (FR)**

(56) Documents cités:
CN-A- 112 763 136 DE-A1- 102017 108 708
US-A1- 2022 399 587

Description

DOMAINE TECHNIQUE

La présente invention concerne les unités de stockage d'énergie électrique, telles qu'une cellule de batterie, en particulier une batterie lithium-ion, et plus particulièrement la gestion de telles cellules, notamment la détection d'une déformation d'un emballage d'une telle cellule.

ETAT DE LA TECHNIQUE

Actuellement, on utilise des petites batteries, également appelées « Smart Cell » en langue anglaise, terme générique qui décrit une cellule de batterie, par exemple une batterie lithium-ion ou Li-ion, équipée d'un système de gestion de batterie, noté « Battery Management System, ou BMS » en langue anglaise dédié à l'auto-mesure, l'auto-diagnostic, l'auto-équilibrage de la batterie. Un point important de l'auto-diagnostic est la surveillance de l'état de sécurité de la cellule. En outre, les petites batteries comprennent généralement une ou plusieurs cellules logées au sein d'un emballage hermétique à l'air. Par exemple, on connaît l'étude de la déformation de l'emballage d'une cellule Li-ion par exploitation du signal d'une jauge de contrainte appliquée sur sa surface. La déformation peut, en fait, être le signe d'une accumulation anormale de gaz pouvant entraîner un gonflement de l'emballage, provoquée par exemple par une surcharge, une décharge trop importante ou un début d'emballement thermique pouvant entrainer une dilatation de l'emballage. Dans des conditions d'utilisation nominale de la cellule, la déformation peut être liée à l'état de charge de la cellule (noté SoC) ou à l'état de santé de la cellule (noté SoH).

Les jauges de contrainte sont des capteurs extrêmement sensibles à la température, c'est-à-dire que leur signal change, autant à cause de la déformation, que de la température. L'utilisation de jauges dites auto compensées, censées dériver en température de manière à compenser la dilatation thermique du matériel sur lequel elles sont appliquées, ne suffit pas à éviter l'influence de la température sur le signal exploitable, parce qu'une cellule de batterie est assimilable à un objet plutôt hétérogène, composé de métaux différents, d'électrolyte et d'un emballage pouvant être de nature métallique ou constitué d'une fine couche d'aluminium recouverte de polymère sur ses deux faces. En plus, l'auto compensation des jauges n'est valable que sur une plage de températures restreinte, généralement entre 10°C et 50°C. Cependant, pour des cellules de batterie, la température peut varier de -20°C à 60°C, et il peut être intéressant de connaître les déformations de l'emballage aux températures limites de fonctionnement d'une batterie.

Par ailleurs, une utilisation classique de deux jauges de contrainte sur deux faces opposées d'un objet subissant des déformations opposées n'est pas possible non plus pour une cellule logée au sein d'un emballage hermétique, car l'accès à l'intérieur de la cellule n'est pas possible.

On peut également citer l'utilisation de deux jauges, dont une jauge de référence. Par exemple, les jauges appelées « Dummy gauge » en langue anglais, c'est-à-dire des jauges fictives. Les jauges fictives utilisent une première jauge de contrainte active et une deuxième jauge identique à la première, installées sur un échantillon non déformé du même matériau que celui de l'élément dont on souhaite mesurer la déformation. Mais les jauges fictives sont des systèmes encombrants.

Pour améliorer la mesure d'une jauge de contrainte, on peut utiliser des systèmes de mesure utilisant des convertisseurs numériques à haute résolution (supérieure ou égale à 24 bits). Mais ces techniques sont destinées à être utilisées en laboratoire, notamment car la plupart de ces convertisseurs sont alimentés en 5 Volts, à partir d'une source de tension de 220 V, dite haute tension. Ces convertisseurs ne sont pas adaptés pour être alimentés par une batterie, notamment une petite batterie, fournissant une tension de 2,5 Volts, dite faible tension.

On peut citer, par exemple, la demande de brevet chinois CN112763136A, qui divulgue un système d'alarme de pression de bloc de batterie de puissance, et la demande de brevet allemand DE102017108708A1 qui divulgue un système de surveillance d'un état de charge d'une batterie basée sur une dilatation de la batterie.

On peut également citer des systèmes utilisant une calibration du signal d'une jauge de contrainte, par exemple, la demande de brevet américain US3130578, qui divulgue un système comprenant un pont de Wheatstone pour mesurer le signal d'une jauge de contrainte équipée d'un circuit de contrôle commandé par des interrupteurs, pour court-circuiter une résistance du pont de Wheatstone. Mais ce système utilise des circuits de contrôle et des interrupteurs qui sont complexes à mettre en œuvre, et qui en outre sont consommateurs d'énergie électrique.

Un objet de la présente invention est donc de fournir des moyens pour améliorer la détection d'une déformation d'un emballage d'une cellule de batterie, et plus particulièrement en s'affranchissant de l'influence de la température sur les appareils de détection.

Les autres objets, caractéristiques et avantages de la présente invention apparaîtront à l'examen de la description suivante et des dessins d'accompagnement. Il est entendu que d'autres avantages peuvent être incorporés.

## RESUME

Il est proposé un dispositif de détection d'une déformation d'un emballage d'une cellule de batterie, comprenant :

- un circuit de mesure comportant un pont de Wheatstone lui-même comprenant une jauge de contrainte ayant une résistance variant en fonction d'une déformation de l'emballage, et
- une unité de commande électronique configurée pour :

  • mesurer une tension de sortie du pont de Wheatstone, et pour
  • détecter une déformation de l'emballage lorsque la tension de sortie est différente d'un seuil de tension de référence.

Le pont de Wheatstone comprend une résistance variable dont la valeur est commandée par l'unité de commande électronique, et le dispositif comprend :

- un capteur de température configuré pour mesurer une température de l'emballage ; et
- une mémoire dans laquelle est stockée une table de correspondance comprenant des valeurs de la résistance variable associées respectivement à des températures pour lesquelles la cellule de batterie est dans un état de fonctionnement normal.

L'unité de commande électronique est en outre configurée pour :

- déterminer une température courante à partir du capteur de température, et pour
- placer la valeur de la résistance variable à la valeur associée à la température courante dans la table de correspondance.

Ainsi on fournit un dispositif permettant de détecter une déformation d'un emballage d'une cellule de batterie en s'affranchissant de l'influence de la température sur les appareils de détection. Un tel dispositif est particulièrement adapté pour être embarqué, avec la batterie, au sein d'un équipement mobile, par exemple portatif.

Selon un autre aspect, il est proposé un procédé de détection d'une déformation d'un emballage contenant une cellule de batterie, à l'aide d'un dispositif de détection tel que défini ci-avant.

Le procédé comprend :

- une mesure d'une température courante de l'emballage ;
- un accès à la table de correspondance du dispositif ;
- un placement d'une valeur de la résistance variable du dispositif à une valeur associée à la température courante dans la table de correspondance ;
- une mesure d'une tension de sortie du pont de Wheatstone du dispositif ; et
- une détection d'une déformation de l'emballage lorsque la tension de sortie est différente d'un seuil de tension de référence.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente schématiquement un mode de réalisation d'un dispositif de détection d'une déformation d'un emballage d'une cellule de batterie ;
La figure 2 représente schématiquement un autre mode de réalisation du dispositif de détection illustré à la figure 1.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Avant d'entamer une revue détaillée de modes de réalisation et de mises en oeuvre de l'invention, sont énoncées ci-après des caractéristiques optionnelles qui peuvent éventuellement être utilisées en association ou alternativement.

Selon un exemple, l'unité de commande électronique est configurée pour mesurer une déformation de l'emballage à partir de la tension de sortie mesurée.

Selon un exemple, le pont de Wheatstone est couplé électriquement à la cellule de batterie et une tension d'excitation du pont de Wheatstone est fournie par la cellule de batterie. On fournit un dispositif particulièrement adapté pour être embarqué, avec la cellule de batterie, au sein d'un équipement consommateur d'énergie électrique, par exemple un équipement portatif.

Selon un exemple, lequel le pont de Wheatstone est couplé électriquement à l'unité de commande électronique et une tension d'excitation du pont de Wheatstone est fournie par l'unité de commande électronique.

Selon un exemple, le pont de Wheatstone comprend des première et deuxième résistances couplées électriquement entre elles en série, la résistance variable et la jauge de contrainte étant couplées électriquement entre elles en série et couplées électriquement en parallèle des première et deuxième résistances.

Selon un exemple, les première et deuxième résistances sont réalisées sur un même substrat de semi-conducteur et la résistance variable est réalisée sur le même substrat de semi-conducteur. On limite encore davantage l'effet de la température sur les équipements du dispositif de détection.

Selon un exemple, la résistance variable a une première borne couplée électriquement à une borne de la jauge de contrainte par l'intermédiaire d'une première résistance additionnelle, et une deuxième borne couplée électriquement à la borne de la jauge de contrainte par l'intermédiaire d'une deuxième résistance additionnelle, la valeur de la deuxième résistance additionnelle étant strictement inférieure à celle de la première résistance additionnelle. Un tel dispositif est adapté à des jauges de contrainte ayant une résistance dont la valeur nominale est faible, par exemple 120 Ohms, 350 Ohms ou 1000 Ohms.

Selon un exemple, les températures de la table de correspondance sont comprises entre - 20°C et +60°C.

Selon un exemple les températures de la table de correspondance sont distinctes deux à deux de 5°C.

Selon un exemple, la batterie est du type lithium-ion.

Selon un exemple, le procédé comprend une mesure d'une déformation de l'emballage à partir de la tension de sortie mesurée.

Selon un exemple, le procédé comprend, avant l'accès à la table de correspondance:

- une création de la table de correspondance comprenant, pour chaque température de la table de correspondance :

   ○ un placement de l'emballage à une température correspondant à la température de la table de correspondance ;
   ○ une mesure de la tension de sortie du pont de Wheatstone ;
   ○ un placement de la valeur de la résistance variable à une valeur associée à la température de sorte que la tension de sortie soit égale à un seuil de tension de référence correspondant à un état de fonctionnement normal de la cellule de batterie ; et
   ○ un enregistrement, dans la table de correspondance, de la valeur associée à la température ; et

- un enregistrement, dans la mémoire du dispositif, de la table de correspondance.

Il est précisé que dans le cadre de la présente invention, l'expression « A couplé à B » ou « A couplé électriquement à B » est synonyme de « A est en connexion électrique avec B » et ne signifie pas nécessairement qu'il n'existe pas d'organe entre A et B. Ainsi ces expressions s'entendent d'une connexion électrique entre deux éléments, cette connexion pouvant ou non être directe, cela signifie qu'il est possible qu'entre un premier dispositif A et un deuxième dispositif B qui sont électriquement connectés, un courant circule en A, en B, et sur le parcours reliant A à B, ce parcours pouvant ou non comprendre d'autres équipements électriques.

A l'inverse, dans le cadre de la présente invention, le terme «électriquement couplé directement» s'entend d'une connexion électrique directe entre deux éléments. Cela signifie qu'entre un premier dispositif A et un deuxième dispositif B qui sont électriquement couplés directement aucun autre équipement n'est présent, autre qu'une connexion électrique ou plusieurs connexions électriques.

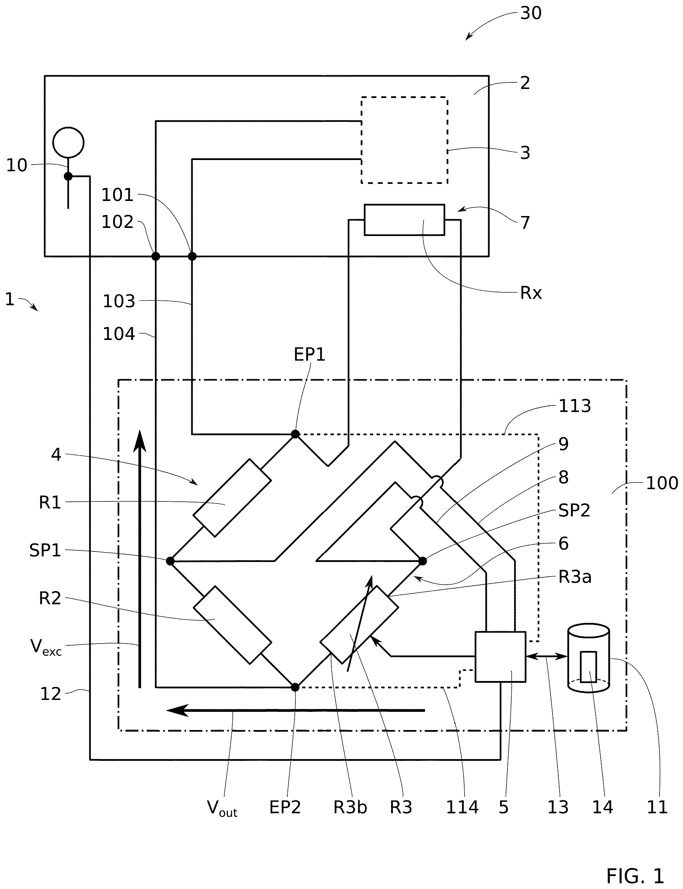

Sur la figure 1, on a représenté un dispositif de détection 1 d'une déformation d'un emballage 2 d'une cellule 3 de batterie 30. En d'autres termes, la batterie 30 comprend un emballage 2 au sein duquel une ou plusieurs cellules 3 sont logées. L'emballage 2 peut être cylindrique, par exemple de forme prismatique, de forme cylindrique à section circulaire, ou de forme parallélépipédique. On entend par cylindre, ou forme cylindrique, un solide délimité par une surface externe, dite cylindrique et par deux plans. La surface cylindrique est décrite par une droite de direction constante, appelée droite génératrice, se déplaçant le long d'une courbe fermée, appelée courbe directrice. Lorsqu'un plan n'est pas perpendiculaire à la droite génératrice, le cylindre est tronqué. Lorsqu'un plan est perpendiculaire à la droite génératrice, le cylindre est droit. Lorsque la section du cylindre est circulaire, le cylindre est dit circulaire. Un cylindre droit et circulaire est appelé cylindre de révolution. Lorsque la courbe directrice est un polygone et les plans sont parallèles, le cylindre est un prisme.

On entend par parallélépipédique, un solide délimité par six faces qui sont des parallélogrammes. Dans le cas des cellules de batteries, le parallélépipède est typiquement un prisme dont la courbe directrice est constituée par un rectangle. L'emballage 2 peut être de nature souple, comme un sachet de forme prismatique ou parallélépipédique, ou de nature semi-rigide comme un boitier cylindrique circulaire, ou encore prismatique ou parallélépipédique. On entend par emballage souple, un emballage déformable sous l'effet de son propre poids. On entend par emballage semi-rigide un emballage qui ne se déforme pas sous l'effet de son propre poids, et qui peut se déformer avec un rayon de courbure sans rupture. On dit également qu'un emballage semi-rigide présente un module d'Young strictement supérieur à celui d'un emballage souple. Un emballage semi-rigide est moins souple qu'un emballage souple. Dans le cas d'un emballage semi-rigide, typiquement produit par emboutissage de feuilles métalliques de faible épaisseur, celui-ci reste suffisamment souple pour permettre des déformations. Par exemple, la batterie 30 est du type lithium-ion. Une batterie lithium-ion comprend une ou plusieurs cellules 3, dites cellules lithium-ion. Chaque cellule 3 comporte deux électrodes séparées par un électrolyte configuré pour générer des porteurs de charge, notamment des ions lithium.

Le dispositif 1 comprend un circuit de mesure 4 et une unité de commande électronique 5. Plus particulièrement, le circuit de mesure 4 comprend un pont de Wheatstone 6. Le pont de Wheatstone 6 comprend des première et deuxième résistances R1, R2, et une jauge de contrainte 7. En particulier, la jauge de contrainte 7 est placée en contact avec l'emballage 2 de la batterie 30. En outre, le pont de Wheatstone 6 comprend des première et deuxième bornes d'entrée EP1, EP2 et des première et deuxième bornes de sortie SP1, SP2. La première résistance R1 a ses bornes couplées électriquement, et de préférence directement, respectivement à la première borne d'entrée EP1 et à la première borne de sortie SP1. La deuxième résistance R2 a ses bornes couplées électriquement, et de préférence directement, respectivement à la première borne de sortie SP1 et à la deuxième borne d'entrée EP2. Plus particulièrement, les première et deuxième résistances R1, R2 ont, chacune, une valeur de résistance constante. Par exemple, les première et deuxième résistances R1, R2 ont des valeurs de résistance égales.

La jauge de contrainte 7 a une résistance Rx variant en fonction d'une déformation de l'emballage 2. La valeur de la résistance Rx de la jauge de contrainte 7 correspond à la valeur que l'on observe lorsque la jauge de contrainte 7 est soumise à une déformation. La résistance Rx de la jauge de contrainte 7 a ses bornes couplées électriquement, de préférence directement, respectivement à la première borne d'entrée EP1 et à la deuxième borne de sortie SP2. La jauge de contrainte 7 émet un signal qui change en fonction d'une déformation de l'emballage 2. En particulier la valeur de la résistance Rx varie en fonction de la déformation de l'emballage 2. Ainsi, le pont de Wheatstone 6 permet de mesurer la déformation de l'emballage 2, en mesurant le signal de la jauge de contrainte 7.

Le circuit de mesure 4 et l'unité de commande électronique 5 peuvent être imprimés sur une carte à circuits imprimés 100, appelée « Printed Circuit Board » en langue anglaise.

Les première et deuxième bornes d'entrée EP1, EP2 sont configurées pour recevoir une tension d'excitation Vexc. La tension d'excitation Vexc peut être fournie par la carte 100. Ainsi, on peut fournir une tension d'excitation Vexc, par exemple de 5V. De préférence, la carte 100 est couplée électriquement à la cellule 3 de batterie et la tension d'excitation Vexc est fournie par la cellule 3 de batterie 30. Ainsi on peut embarquer la carte 100 et la batterie 30 au sein d'un même équipement. L'ensemble carte 100 et batterie 30 est donc compacte. Par exemple, les bornes d'entrée EP1, EP2 sont respectivement couplées à des bornes de sortie 101, 102 de la batterie 30, par des connexions 103, 104. La tension d'excitation Vexc du pont de Wheatstone 6 peut être fournie par la cellule 3 de batterie 30.

De préférence, la tension qui alimente les éléments électroniques du dispositif 1, à savoir le capteur de température 10, l'unité de commande électronique 5 et la mémoire 11, provient de la cellule 3 elle-même. La tension la plus faible d'une cellule 3 est d'environ 2,5 V, par exemple 2,2 V, ce qui correspond à une tension d'alimentation faible (par rapport à une tension de 5 Volts considérée comme élevée). Par exemple, la tension d'excitation du pont de Wheatstone 6 peut être fixée à 2,5 V, ou 2,2 V, ou de préférence à 2,048 V, afin de pouvoir alimenter le pont de Wheatstone 6 par la tension fournie par la cellule 3. La tension 2,048 V a la particularité de pouvoir être générée directement par un convertisseur numérique/analogique d'un microcontrôleur de l'unité de commande électronique 5. En variante, les bornes d'entrée EP1, EP2 peuvent être couplées à l'unité de commande électronique 5, par des connexions 113, 114. Ainsi, la tension d'excitation Vexc du pont de Wheatstone 6 peut être fournie par l'unité de commande électronique 5. Par exemple, l'unité de commande électronique 5 peut être couplée électriquement, par des connexions non représentées à des fins de simplification, à la cellule 3.

En outre les première et deuxième bornes de sortie SP1, SP2 sont couplées à l'unité de commande électroniques 5, par des connexions filaires 8, 9. L'unité de commande électronique 5 est configurée pour mesurer une tension de sortie Vout du pont de Wheatstone 6. La tension de sortie Vout peut être prise aux bornes de sortie SP1, SP2 du pont de Wheatstone 6. En outre, l'unité de commande électronique 5 est configurée pour détecter une déformation de l'emballage 2 lorsque la tension de sortie Vout est différente d'un seuil de tension de référence Vref. On entend par détection, une mesure d'un paramètre représentatif d'une déformation de l'emballage 2. Par exemple, le paramètre représentatif est la tension de sortie Vout du pont de Wheatstone 6. Par exemple, l'unité de commande électronique 5 peut être configurée pour mesurer une déformation de l'emballage 2 à partir de la tension de sortie Vout mesurée.

En particulier, le pont de Wheatstone 6 comprend une résistance variable R3 dont la valeur est commandée par l'unité de commande électronique 5. En d'autres termes, l'unité de commande électronique 5 est configurée pour modifier la valeur de la résistance variable R3. On dit également que l'unité de commande électronique 5 peut ajuster la valeur de la résistance variable R3 ou placer la valeur de la résistance variable R3 à une valeur prédéfinie, ou que l'unité de commande électronique 5 peut affecter, à la résistance variable R3, une valeur de résistance prédéfinie. La résistance variable R3 est destinée à diminuer, et notamment à corriger, les effets de la température sur la détection de la déformation de l'emballage 2. C'est-à-dire que de nombreux facteurs peuvent intervenir dans la déformation de l'emballage 2, et le dispositif de détection 1 permet de détecter une déformation de l'emballage 2 que du fait de certains d'entre eux, et plus particulièrement ceux qui apparaissent lors d'un fonctionnement anormal de la cellule 3. De manière générale, la déformation de l'emballage 2 peut provenir, soit, en fonctionnement normal de la cellule 3, d'une dilatation mécanique provoquée par une élévation de température, soit d'un fonctionnement anormal de la cellule 3, par une accumulation anormale de gaz, provoquée par exemple par une surcharge, une décharge trop importante ou un début d'emballement thermique. La résistance variable R3 va permettre d'identifier les déformations éventuelles du fait de la température lorsque la cellule 3 de batterie 30 est dans un état de fonctionnement normal et à une température spécifique. On entend par état de fonctionnement normal, une cellule 3 de batterie 30 ayant un état de charge SoC constant et qui n'est soumise qu'à des contraintes mécaniques représentatives de son environnement, c'est-à-dire des contraintes provoquées dans des conditions de fonctionnement normales. En d'autres termes, l'état de fonctionnement normal peut correspondre à des états de charge de la cellule 3 de batterie 30 compris entre 0 et 100 % à l'intérieur d'une plage de température préconisée par le constructeur (habituellement entre -20°C et 60 °C) pour une cellule sans défauts.

La résistance variable R3 permet de refaire le « zéro » sur le signal de sortie du pont de Wheatstone 6, c'est-à-dire qu'elle permet d'obtenir une tension de sortie Vout égale, ou proche du seuil de tension de référence Vref. On considère que lorsque la tension de sortie Vout est égale, ou proche du seuil de tension de référence Vref, la déformation est nulle ou négligeable, ou encore que la déformation est due aux effets de la température sur l'emballage 2 alors que la cellule 3 est dans l'état de fonctionnement normal, comme par exemple une dilatation mécanique de l'emballage 2 due à une augmentation de la température de l'emballage 2. Dans ce cas, la cellule 3 n'est pas forcément dans l'état de fonctionnement anormal, et on considère cette dilatation mécanique comme naturelle. De façon générale, la tension de sortie Vout est fonction, notamment, des valeurs de la résistance variable R3 et de la résistance Rx de la jauge de contrainte 7. En d'autres termes, en modifiant la valeur de la résistance variable R3, on modifie la valeur de la tension de sortie Vout.

La déformation $\varepsilon$ est habituellement exprimée en $\mu$m/m. Les équations 1 à 4 qui mettent en relation la déformation avec les paramètres du pont de Wheatstone 6 et les tensions sont les suivantes :

$$Rx = \frac{Vout \times R3 \times (R1 + R2) + Vexc \times R1 \times R3}{Vexc \times R2 - Vout \times (R1 + R2)}$$

(équation 1)

où :

- R1 est la première résistance du pont de Wheatstone 6 (en Ohm) ;
- R2 est la deuxième résistance du pont de Wheatstone 6 (en Ohm) ;
- R3 est la résistance variable (en Ohm) ;
- Vout est la tension de sortie du pont de Wheatstone 6 (en Volt) ;
- Vexc est la tension d'excitation du pont de Wheatstone 6 (en Volt) ;
- Rx est la résistance de la jauge de contrainte 7 (en Ohm) soumise à une déformation ou affectée par la température (ou les deux).

La déformation $\varepsilon$ peut s'exprimer selon l'équation 2 suivante :

$$\varepsilon = \frac{Rx - Rnom}{Rnom \times k}$$

(équation 2)

où :

- Rnom est la valeur nominale de la jauge de contrainte 7 (en Ohm) ;
- k est le facteur de jauge donné par le constructeur (en m/$\mu$m), généralement k = 2.

La valeur nominale Rnom de la résistance Rx correspond à la limite supérieure de la plage de mesure de la jauge de contrainte 7. En d'autres termes, la résistance Rx de la jauge de contrainte 7 peut varier de 0 à Rnom.

Dans le cas où le seuil de tension de référence Vref est égal à 0 V, et lorsque la tension de sortie Vout est égale au seuil de tension de référence Vref, c'est-à-dire égal à 0 V, alors d'après l'équation 1, on obtient l'équation 3 suivante :

$$Rx = \frac{R1 \times R3}{R2}$$

(équation 3)

Avantageusement, on peut choisir R1 = R2, et l'on obtient l'équation 4 suivante :

$$Rx = R3$$

(équation 4)

Ainsi, lorsque l'emballage 2 est dans un état non déformé, c'est-à-dire que $\varepsilon$ = 0 $\mu$m/m, alors d'après l'équation 2, on obtient Rx = Rnom.

Ainsi, lorsqu'on modifie la valeur de la résistance variable R3, de manière à obtenir une tension de sortie Vout égale à 0 V, alors, d'après l'équation 1 on obtient la relation Rx = R3 (équation 4). Si l'emballage 2 est dans l'état non déformé, alors la valeur de la résistance variable R3 qui a permis d'obtenir la tension de sortie Vout = 0 V caractérise l'état non déformé de l'emballage 2. De manière générale, lorsque la cellule 3 est dans l'état de fonctionnement normal, la valeur de la résistance variable R3 qui a permis d'obtenir la tension de sortie Vout = Vref caractérise l'état de fonctionnement normal de la cellule 3. On notera que lorsque la cellule 3 est dans l'état de fonctionnement normal, et selon la valeur de la température de l'emballage 2, l'emballage 2 peut être dans un état déformé du fait d'une dilatation mécanique.

En outre, lorsque la tension de sortie Vout est égale au seuil de tension de référence Vref, les valeurs de la résistance variable R3 et de la résistance Rx sont égales. Ainsi, lorsque la cellule 3 est dans l'état de fonctionnement normal, et que les valeurs de la résistance variable R3 et de la résistance Rx sont égales, la tension de sortie Vout est égale au seuil de tension de référence Vref. Par ailleurs, lorsque l'emballage 2 est dans un état déformé, la valeur de la résistance Rx change, et si la résistance variable R3 ne change pas, la tension de sortie Vout change également, c'est-à-dire que la tension Vout est différente du seuil de tension de référence Vref. Lorsque la tension Vout est différente du seuil de tension de référence Vref, on détecte une déformation de l'emballage 2. Le seuil de tension de référence Vref peut être égal, par exemple à 0 V, ou par exemple à Vexc/2 (où Vexc correspond à la tension d'excitation du pont de Wheatstone 6). Lorsque le seuil de tension de référence Vref est égal à Vexc/2, il est possible de mesurer des déformations dans les deux sens (étirements et compressions). Par exemple, la tension d'excitation Vexc peut être fixée à 2,048 V et le seuil de tension de référence Vref fixé à 1,024 V, notamment pour pouvoir détecter une déformation de l'emballage 2 en compression et en étirement. Puisque la cellule 3 peut subir des températures comprises entre -20°C à 60°C, et puisque la jauge de contrainte 7 est sensible à la température, il est utile de prendre en compte la température pour la détection de la déformation de l'emballage 2.

Ainsi, le dispositif 1 comprend un capteur de température 10 et une mémoire 11. Le capteur de température 10 est configuré pour mesurer une température courante Tc de l'emballage 2. En outre, le capteur 10 est couplé à l'unité de commande électronique 5, par une connexion 12, pour fournir à l'unité 5 une information de température de l'emballage 2. Le capteur de température 10 peut être un capteur du type CTN (c'est-à-dire à coefficient de température négatif, ou NTC, Negative Temperature Coefficient en langue anglaise).

La mémoire 11 est couplée à l'unité de commande électronique 5, par une connexion 13, de manière à échanger des données numériques avec l'unité 5. La mémoire 11 peut être imprimée sur la carte 100. Plus particulièrement, la mémoire 11 est configurée pour stocker une table de correspondance 14 comprenant des valeurs de la résistance variable R3 associées respectivement à des températures Ti, notamment à des températures Ti de l'emballage 2. Les températures Ti correspondent à différentes températures courantes Tc de l'emballage 2 lorsque l'emballage 2 est placé dans des conditions distinctes de température. En particulier, les valeurs de la résistance variable R3, dans la table de correspondance 14, correspondent à des températures Ti pour lesquelles la cellule 3 de batterie 30 est dans l'état de fonctionnement normal. Par exemple, les températures Ti de la table de correspondance 14 sont comprises entre -20°C et +60°C. Selon un autre exemple, les températures Ti de la table de correspondance 14 sont distinctes deux à deux de 5°C.

L'unité de commande électronique 5 est en outre configurée pour déterminer la température courante Tc de l'emballage 2 à partir du capteur de température 10, et pour placer la valeur de la résistance variable R3 à la valeur associée à la température courante Tc dans la table de correspondance 14. Ainsi, pour une température courante Tc, si la tension de sortie Vout mesurée est égale au seuil de référence Vref, la cellule 3 est dans l'état de fonctionnement normal. Si, au contraire, la tension de sortie Vout est différente du seuil de tension de référence Vref, alors on détecte une déformation de l'emballage 2. Dans ce cas, la cellule 3 est dans l'état de fonctionnement anormal. Ainsi, le dispositif 1 peut détecter une déformation de l'emballage 2 provoqué par un fonctionnement anormal de la cellule 3. Ainsi, le dispositif 1 permet de détecter une déformation d'un emballage 2 d'une cellule 3 de batterie 30 en s'affranchissant de l'influence de la température sur les appareils de mesure, notamment sur la jauge de contrainte 7. Par ailleurs, puisque la déformation $\varepsilon$ peut être calculée à partir de la valeur de la résistance Rx de la jauge de contrainte 7, selon l'équation 2, et puisque la résistance Rx de la jauge de contrainte 7 peut être calculée à partir de la valeur de la tension de sortie Vout, selon l'équation 1, l'unité de commande électronique 5 est configurée pour calculer la déformation $\varepsilon$ à partir de la tension de sortie Vout. En d'autres termes, l'unité de commande électronique 5 est configurée pour mesurer une déformation de l'emballage 2 à partir de la tension de sortie Vout mesurée. Avantageusement, les résistances additionnelles R1, R2 sont réalisées sur un même substrat de semi-conducteur et la résistance variable R3 est réalisé sur le même substrat de semi-conducteur.

Par exemple, la résistance Rx de la jauge de contrainte 7 peut avoir une valeur nominale Rnom égale à 350 Ohms. D'autres jauges de contrainte 7 peuvent avoir une valeur nominale Rnom égale à 120 Ohms ou égale à 1000 Ohms. En général, les variations de la résistance Rx de la jauge de contrainte 7 sont de quelques milliohms. Dans ce cas, la résistance variable R3 est, de préférence, un potentiomètre numérique ayant une valeur nominale égale à celle de la jauge de contrainte 7, et dont la sensibilité correspond à quelques milliohms.

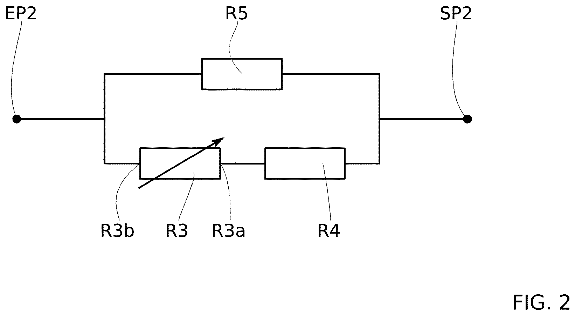

Sur la figure 2, on a représenté un autre mode de réalisation du dispositif de détection 1. Dans ce mode de réalisation, la résistance variable R3 a une première borne R3a couplée électriquement à la deuxième borne de sortie SP2, c'est-à-dire à une borne de la jauge de contrainte 7, par l'intermédiaire d'une première résistance additionnelle R4. Par ailleurs, la résistance variable R3 a une deuxième borne R3b couplée électriquement à la deuxième borne de sortie SP2, c'est-à-dire à la borne de la jauge de contrainte 7, par l'intermédiaire d'une deuxième résistance additionnelle R5. De préférence, la valeur de la deuxième résistance additionnelle R5 est strictement inférieure à celle de la première résistance additionnelle R4. Ce mode de réalisation est particulièrement adapté pour des résistances Rx d'une jauge de contrainte 7 ayant une valeur nominale de 350 Ohms et une sensibilité de quelques milliohms. Ce mode de réalisation permet d'obtenir une résistance variable R3 ayant une valeur nominale supérieure, par exemple égale à 5 kOhms, et donc une meilleure précision autour de la valeur nominale de la jauge de contrainte 7. Si par exemple on imagine avoir 256 possibilités de réglage de la résistance variable R3 (équivalents à des pas d'environ 19,5 ohm entre 0 et 5 kohms), on peut obtenir une résistance variable R3 en variant de 334 ohm jusqu'à 358 ohm environ autour de la valeur de 350 Ohms. Dans ce mode de réalisation, on obtient la relation définie par l'équation 5 suivante :

$$Req = \left(\frac{1}{(R3 + R4)} + \frac{1}{R5}\right)^{-1}$$

(équation 5)

où :

- R4 est la première résistance additionnelle du pont de Wheatstone 6 (en Ohm) ;
- R5 est la deuxième résistance additionnelle du pont de Wheatstone 6 (en Ohm) ;
- Req est la résistance équivalente (en Ohm) qui remplace la résistance variable R3 dans l'équation 1 précédente.

Par exemple, on peut choisir R4 = 3 kOhms et R5 = 375 Ohms. Ainsi, on peut choisir une résistance variable R3 dont la valeur de résistance peut varier entre 0 et 5 kOhms.

Par ailleurs, un procédé de détection d'une déformation de l'emballage 2 d'une cellule 3 de batterie 30 peut être mis en œuvre par le dispositif 1 qui vient d'être décrit. Le procédé comprend les principales étapes suivantes : une mesure d'une température courante Tc de l'emballage 2 ; un accès à la table de correspondance 14 du dispositif 1 ; et un placement d'une valeur de la résistance variable R3 du dispositif 1 à une valeur associée à la température courante Tc dans la table de correspondance 14.

Le procédé peut en outre comprendre une mesure de la tension de sortie Vout du pont de Wheatstone 6 du dispositif 1 ; et une détection d'une déformation de l'emballage 2 lorsque la tension de sortie Vout est différente du seuil de tension de référence Vref. Le procédé peut également comprendre une mesure d'une déformation de l'emballage 2 à partir de la tension de sortie Vout mesurée.

Par exemple, avant l'accès à la table de correspondance 14, le procédé comprend : une création de la table de correspondance 14 et un enregistrement, dans la mémoire 11 du dispositif, de la table de correspondance 14.

La création de la table de correspondance peut comprendre : pour chaque température Ti de la table de correspondance 14 : un placement de l'emballage 2 à une température correspondant à la température Ti de la table de correspondance 14 ; une mesure de la tension de sortie Vout du pont de Wheatstone 6 ; un placement de la valeur de la résistance variable R3 à une valeur associée à la température Ti de sorte que la tension de sortie Vout soit égale au seuil de tension de référence Vref correspondant à un état de fonctionnement normal de la cellule 3 de batterie 30 ; et un enregistrement, dans la table de correspondance 14, de la valeur de la résistance variable R3 associée à la température Ti.

Lors de la création de la table de correspondance 14, la cellule 3 est dans l'état de fonctionnement normal. Puis on place l'emballage 2 à différentes températures Ti. C'est-à-dire que l'emballage 2 est exposé à plusieurs températures Ti. Avantageusement, à chaque nouvelle température Ti un temps de stabilisation de la température est effectué. Plus particulièrement, le temps de stabilisation de la température est effectué avant une nouvelle mesure de la tension de sortie Vout. Le temps de stabilisation permet d'exposer et de stabiliser l'ensemble de la cellule 3 et de la batterie 30, ainsi que l'électronique du dispositif 1 à la même température que celle de l'emballage 2, pour être proche des conditions d'utilisation réelles (les composants électroniques du dispositif 1 peuvent être affectés par la température eux aussi). Puis, à chaque température Ti, on modifie la valeur de la résistance variable R3 afin de ramener la tension de sortie Vout égal à, ou le plus proche de, la valeur du seuil de tension de référence Vref pour lequel la cellule 3 est dans l'état de fonctionnement normal. Puis on enregistre dans la table de correspondance 14, pour chaque température Ti, la température Ti mesurée par le capteur de température 10 et la valeur modifiée de la résistance variable 3 associée à la température Ti. La valeur modifiée enregistrée correspond à la valeur qui a été réglée, par exemple une valeur comprise entre 0 et 255 lorsque la résistance variable R3 est un potentiomètre numérique. Ainsi, on obtient une table de correspondance 14 comprenant une liste de températures Ti et une liste de valeurs de la résistance variable R3 associées respectivement aux températures Ti de la liste. Cette table de correspondance 14 permettra de modifier la valeur de la résistance variable R3 en fonction de chaque température courante Tc mesurée par le capteur de température 10.

En procédant ainsi, les effets de la température sur la détection ou la mesure de la déformation de l'emballage 2 peuvent être diminués ou annulés lors de l'étape d'ajustement de la valeur de la résistance variable R3 à partir de la table de correspondance 14, pouvant être assimilée à une étape de calibration. Ces effets couvrent en particulier l'influence de la température sur la jauge de contrainte, l'effet de la température sur les autres éléments de l'électronique de mesure, mais également l'effet de la température sur la ou les cellules 3, et sur la batterie 30 au travers des effets naturels de dilatation mécanique de ses différents constituants entrainant des déformations de l'emballage 2 que l'on ne souhaite pas détecter/mesurer. Dans un besoin de détection et mesure de déformations anormales de la cellule/batterie, il est en effet important de cibler la détection uniquement sur les phénomènes anormaux, par exemple le signe d'une accumulation anormale de gaz provoquée par exemple par une surcharge, une décharge trop importante ou un début d'emballement thermique.

Avantageusement, on peut modifier la valeur de la résistance variable R3 durant l'utilisation de la batterie 30, et à chaque mesure de la tension de sortie Vout, afin de réduire au minimum l'erreur sur la mesure de la tension de sortie Vout due à la température. L'invention qui vient d'être décrite permet de limiter l'influence de la température sur la jauge de contrainte et sur l'électronique du dispositif. Avantageusement, on ne calcule pas la dérive en température de la jauge de contrainte et on ne la corrige pas non plus par calcul, mais on modifie la valeur d'une résistance variable du pont de Wheatstone pour calibrer à nouveau le pont de Wheatstone, afin de rester dans une plage de mesure sans perdre en résolution (il n'y a pas de diminution du gain). Plus généralement, on met en place une procédure d'auto-calibration d'une jauge par un dispositif rattaché à la cellule de batterie. En outre, la simple détection d'une déformation permet de mettre en évidence un disfonctionnement de la batterie pouvant être dû à différents paramètres, comme un dégagement gazeux ou un emballement thermique, sans avoir à calculer ces derniers.

**Revendications**

1. Dispositif de détection d'une déformation d'un emballage (2) d'une cellule (3) de batterie, comprenant :

   - un circuit de mesure (4) comportant un pont de Wheatstone (6) lui-même comprenant une jauge de contrainte (7) ayant une résistance (Rx) variant en fonction d'une déformation de l'emballage (2), et
   - une unité de commande électronique (5) configurée pour :

      • mesurer une tension de sortie (Vout) du pont de Wheatstone (6), et pour
      • détecter une déformation de l'emballage (2) lorsque la tension de sortie (Vout) est différente d'un seuil de tension de référence (Vref),

   **caractérisé en ce que** le pont de Wheatstone (6) comprend une résistance variable (R3) dont la valeur est commandée par l'unité de commande électronique (5), et **en ce que** le dispositif comprend :

   - un capteur de température (10) configuré pour mesurer une température de l'emballage (2) ; et
   - une mémoire (11) dans laquelle est stockée une table de correspondance (14) comprenant des valeurs de la résistance variable (R3) associées respectivement à des températures pour lesquelles la cellule (3) de batterie est dans un état de fonctionnement normal ;

l'unité de commande électronique (5) étant configurée pour :

- déterminer une température courante à partir du capteur de température (10), et pour
- placer la valeur de la résistance variable (R3) à la valeur associée à la température courante dans la table de correspondance (14).

2. Dispositif selon la revendication 1, dans lequel, l'unité de commande électronique (5) est configurée pour mesurer une déformation de l'emballage (2) à partir de la tension de sortie (Vout) mesurée.

3. Dispositif selon la revendication 1 ou 2, dans lequel le pont de Wheatstone (6) est couplé électriquement à la cellule (3) de batterie et une tension d'excitation (Vexc) du pont de Wheatstone (6) est fournie par la cellule (3) de batterie.

4. Dispositif selon la revendication 1 ou 2, dans lequel le pont de Wheatstone (6) est couplé électriquement à l'unité de commande électronique (5) et une tension d'excitation (Vexc) du pont de Wheatstone (6) est fournie par l'unité de commande électronique (5).

5. Dispositif selon l'une quelconque des revendications 1 à 4, dans lequel le pont de Wheatstone (6) comprend des première et deuxième résistances (R1, R2) couplées électriquement entre elles en série, la résistance variable (R3) et la jauge de contrainte (7) étant couplées électriquement entre elles en série et couplées électriquement en parallèle des première et deuxième résistances (R1, R2).

6. Dispositif selon la revendication 5, dans lequel les première et deuxième résistances (R1, R2) sont réalisées sur un même substrat de semi-conducteur et la résistance variable (R3) est réalisée sur le même substrat de semi-conducteur.

7. Dispositif selon l'une quelconque des revendications 1 à 6, dans lequel, la résistance variable (R3) a une première borne couplée électriquement à une borne de la jauge de contrainte (7) par l'intermédiaire d'une première résistance additionnelle (R4), et une deuxième borne couplée électriquement à la borne de la jauge de contrainte (7) par l'intermédiaire d'une deuxième résistance additionnelle (R5), la valeur de la deuxième résistance additionnelle (R5) étant strictement inférieure à celle de la première résistance additionnelle (R4).

8. Dispositif selon l'une quelconque des revendications 1 à 7, dans lequel les températures de la table de correspondance (14) sont comprises entre -20°C et +60°C.

9. Dispositif selon l'une quelconque des revendications 1 à 8, dans lequel les températures de la table de correspondance (14) sont distinctes deux à deux de 5°C.

10. Dispositif selon l'une quelconque des revendications 1 à 9, dans lequel la batterie est du type lithium-ion.

11. Procédé de détection d'une déformation d'un emballage (2) contenant une cellule (3) de batterie, à l'aide d'un dispositif de détection selon l'une quelconque des revendications précédentes, **caractérisé en ce que** le procédé comprend :

• une mesure d'une température courante de l'emballage (2) ;
• un accès à la table de correspondance (14) du dispositif ;
• un placement d'une valeur de la résistance variable (R3) du dispositif à une valeur associée à la température courante dans la table de correspondance (14) ;
• une mesure d'une tension de sortie (Vout) du pont de Wheatstone (6) du dispositif ; et
• une détection d'une déformation de l'emballage (2) lorsque la tension de sortie (Vout) est différente d'un seuil de tension de référence (Vref).

12. Procédé selon la revendication 11, comprenant une mesure d'une déformation de l'emballage (2) à partir de la tension de sortie (Vout) mesurée.

13. Procédé selon la revendication 11 ou 12, comprenant, avant l'accès à la table de correspondance (14):

- une création de la table de correspondance (14) comprenant, pour chaque température de la table de correspondance (14) :

  • un placement de l'emballage (2) à une température correspondant à la température de la table de correspondance (14) ;
  • une mesure de la tension de sortie (Vout) du pont de Wheatstone (6) ;
  • un placement de la valeur de la résistance variable (R3) à une valeur associée à la température de sorte que la tension de sortie (Vout) soit égale à un seuil de tension de référence (Vref) correspondant à un état de fonctionnement normal de la cellule (3) de batterie ; et
  • un enregistrement, dans la table de correspondance (14), de la valeur associée à la température ; et

- un enregistrement, dans la mémoire (11) du dispositif, de la table de correspondance (14)

**Patentansprüche**

1. Vorrichtung zum Erfassen einer Verformung einer Verpackung (2) einer Batteriezelle (3), die Folgendes umfasst:

   - eine Messschaltung (4), die eine Wheatstone-Brücke (6) umfasst, die selbst ein Dehnungsmessgerät (7) umfasst, das einen Widerstand (Rx) aufweist, der in Abhängigkeit von einer Verformung der Verpackung (2) variiert, und
   - eine elektronische Steuereinheit(5), die konfiguriert ist zum:

     • Messen einer Ausgangsspannung (Vout) in der Wheatstone-Brücke (6), und zum
     • Erfassen einer Verformung der Verpackung (2), wenn sich die Ausgangsspannung (Vout) von einem Referenzspannungsschwellenwert (Vref) unterscheidet,

   **dadurch gekennzeichnet, dass** die Wheatstone-Brücke (6) einen variablen Widerstand (R3) umfasst, dessen Wert von der elektronischen Steuereinheit (5) gesteuert wird, und dass die Vorrichtung Folgendes umfasst:

   - einen Temperatursensor (10), der dazu konfiguriert ist, eine Temperatur der Verpackung (2) zu messen; und
   - einen Speicher (11), in dem eine Entsprechungstabelle (14) gespeichert ist, die Werte des variablen Widerstands (R3) umfasst, die jeweils Temperaturen zugeordnet sind, für die die Batteriezelle (3) in einem normalen Betriebszustand ist;

   wobei die elektronische Steuereinheit (5) konfiguriert ist zum:

   - Bestimmen einer aktuellen Temperatur ausgehend von dem Temperatursensor (10), und zum
   - Platzieren des Werts des variablen Widerstands (R3) auf den Wert, der der aktuellen Temperatur in der Entsprechungstabelle (14) zugeordnet ist.

2. Vorrichtung nach Anspruch 1, wobei die elektronische Steuereinheit (5) dazu konfiguriert ist, eine Verformung der Verpackung (2) ausgehend von der gemessenen Ausgangsspannung (Vout) zu messen.

3. Vorrichtung nach Anspruch 1 oder 2, wobei die Wheatstone-Brücke (6) elektrisch mit der Batteriezelle (3) gekoppelt ist, und eine Erregungsspannung (Vexe) der Wheatstone-Brücke (6) von der Batteriezelle (3) geliefert wird.

4. Vorrichtung nach Anspruch 1 oder 2, wobei die Wheatstone-Brücke (6) elektrisch mit der elektronischen Steuereinheit (5) gekoppelt ist, und eine Erregungssteuerung (Vexe) der Wheatstone-Brücke (6) von der elektronischen Steuereinheit (5) geliefert wird.

5. Vorrichtung nach einem der Ansprüche 1 bis 4, wobei die Wheatstone-Brücke (6) einen ersten und einen zweiten Widerstand (R1, R2) umfasst, die miteinander elektrisch in Reihe geschaltet sind, wobei der variable Widerstand (R3) und das Dehnungsmessgerät (7) elektrisch miteinander in Reihe geschaltet sind und mit dem ersten und dem zweiten Widerstand (R1, R2) parallel geschaltet sind.

6. Vorrichtung nach Anspruch 5, wobei der erste und der zweite Widerstand (R1, R2) aus dem gleichen Halbleitersubstrat hergestellt sind und der variable Widerstand (R3) auf dem gleichen Halbleitersubstrat hergestellt ist.

7. Vorrichtung nach einem der Ansprüche 1 bis 6, wobei der variable Widerstand (R3) eine erste Klemme aufweist, die elektrisch mit einer Klemme des Dehnungsmessgeräts (7) über einen ersten zusätzlichen Widerstand (R4) gekoppelt ist, und eine zweite Klemme, die elektrisch mit der Klemme des Dehnungsmessgeräts (7) über einen zweiten zusätzlichen Widerstand (R5) gekoppelt ist, wobei der Wert des zweiten zusätzlichen Widerstands (R5) strikt kleiner ist als der des ersten zusätzlichen Widerstands (R4).

8. Vorrichtung nach einem der Ansprüche 1 bis 7, wobei die Temperaturen der Entsprechungstabelle (14) zwischen -20 °C und +60 °C liegen.

9. Vorrichtung nach einem der Ansprüche 1 bis 8, wobei sich die Temperaturen der Entsprechungstabelle (14) paarweise voneinander um 5 °C unterscheiden.

10. Vorrichtung nach einem der Ansprüche 1 bis 9, wobei die Batterie vom Lithium-Ionen-Typ ist.

11. Erfassungsverfahren einer Verformung einer Verpackung (2), die eine Batteriezelle (3) enthält, mit Hilfe einer Erfassungsvorrichtung nach einem der vorstehenden Ansprüche, **dadurch gekennzeichnet, dass** das Verfahren Folgendes umfasst:

   • Messen einer aktuellen Temperatur der Verpackung (2);
   • Zugreifen auf die Entsprechungstabelle (14) der Vorrichtung;
   • Platzieren eines Werts des variablen Widerstands (R3) der Vorrichtung auf den Wert, der der aktuellen Temperatur in der Entsprechungstabelle (14) zugeordnet ist;
   • Messen einer Ausgangsspannung (Vout) der Wheatstone-Brücke (6) der Vorrichtung; und
   • Erfassen einer Verformung der Verpackung (2), wenn sich die Ausgangsspannung (Vout) von einem Referenzspannungsschwellenwert (Vref) unterscheidet,

12. Verfahren nach Anspruch 11, das eine Messung einer Verformung der Verpackung (2) ausgehend von der gemessenen Ausgangsspannung (Vout) umfasst.

13. Verfahren nach Anspruch 11 oder 12, das vor dem Zugreifen auf die Entsprechungstabelle (14) Folgendes umfasst:

   - Anlegen der Entsprechungstabelle (14), die für jede Temperatur der Entsprechungstabelle (14) Folgendes umfasst:

      • Platzieren der Verpackung (2) bei einer Temperatur, die der Temperatur der Entsprechungstabelle (14) entspricht;
      • Messen der Ausgangsspannung (Vout) der Wheatstone-Brücke (6);
      • Platzieren des variablen Widerstandswerts (R3) auf einen Wert, der der Temperatur derart zugeordnet ist, dass die Ausgangsspannung (Vout) gleich einem Referenzspannungsschwellenwert (Vref) ist, der einem normalen Betriebszustand der Batteriezelle (3) entspricht;
      • Aufzeichnen in der Entsprechungstabelle (14) des Werts, der der Temperatur zugeordnet ist; und

   - Aufzeichnen in dem Speicher (11) der Vorrichtung der Entsprechungstabelle (14).

## Claims

1. Device for detecting a deformation of a packaging (2) of a battery cell (3), comprising:

   - a measuring circuit (4) comprising a Wheatstone bridge (6) itself comprising a stress gauge (7) having a resistance (Rx) varying as a function of a deformation of the packaging (2), and
   - an electronic control unit (5) configured to:

      • measure an output voltage (Vout) of the Wheatstone bridge (6), and to
      • detect a deformation of the packaging (2) when the output voltage

   (Vout) is different from a reference voltage threshold (Vref), **characterised in that** the Wheatstone bridge (6) comprises a variable resistance (R3), the value of which is controlled by the electronic control unit (5), and **in that** the device comprises:

- a temperature sensor (10) configured to measure a temperature of the packaging (2); and
- a memory (11) in which a lookup table (14) comprising values of the variable resistance (R3) associated respectively with temperatures for which the battery cell (3) is in a normal operating state;

the electronic control unit (5) being configured to:

- determine a current temperature from the temperature sensor (10), and to
- place the value of the variable resistance (R3) at the value associated with the current temperature in the lookup table (14).

2. Device according to claim 1, wherein, the electronic control unit (5) is configured to measure a deformation of the packaging (2) from the measured output voltage (Vout).

3. Device according to claim 1 or 2, wherein the Wheatstone bridge (6) is electrically coupled to the battery cell (3) and an excitation voltage (Vexc) of the Wheatstone bridge (6) is supplied by the battery cell (3).

4. Device according to claim 1 or 2, wherein the Wheatstone bridge (6) is electrically coupled to the electronic control unit (5) and an excitation voltage (Vexc) of the Wheatstone bridge (6) is supplied by the electronic control unit (5).

5. Device according to any one of claims 1 to 4, wherein the Wheatstone bridge (6) comprises first and second resistances (R1, R2) electrically coupled to one another in series, the variable resistance (R3) and the stress gauge (7) being electrically coupled to one another in series and electrically coupled in parallel from the first and second resistances (R1, R2).

6. Device according to claim 5, wherein the first and second resistances (R1, R2) are produced on one same semiconductor substrate and the variable resistance (R3) is produced on the same semiconductor substrate.

7. Device according to any one of claims 1 to 6, wherein, the variable resistance (R3) has a first terminal electrically coupled to a terminal of the stress gauge (7) through a first additional resistance (R4), and a second terminal electrically coupled to the terminal of the stress gauge (7) through a second additional resistance (R5), the value of the second additional resistance (R5) being strictly less than that of the first additional resistance (R4).

8. Device according to any one of claims 1 to 7, wherein the temperatures of the lookup table (14) are between -20°C and +60°C.

9. Device according to any one of claims 1 to 8, wherein the temperatures of the lookup table (14) are distinct in pairs of 5°C.

10. Device according to any one of claims 1 to 9, wherein the battery is of the lithium-ion type.

11. Method for detecting a deformation of a packaging (2) containing a battery cell (3), using a detection device according to any one of the preceding claims, **characterised in that** the method comprises:

- a measurement of a current temperature of the packaging (2);
- an access to the lookup table (14) of the device;
- a placement of a value of the variable resistance (R3) of the device at a value associated with the current temperature in the lookup table (14);
- a measurement of an output voltage (Vout) of the Wheatstone bridge (6) of the device; and
- a detection of a deformation of the packaging (2) when the output voltage (Vout) is different from a reference voltage threshold (Vref).

12. Method according to claim 11, comprising a measurement of a deformation of the packaging (2) from the measured output voltage (Vout).

13. Method according to claim 11 or 12, comprising, before accessing the lookup table (14):

- a creation of the lookup table (14) comprising, for each temperature of the lookup table (14):

  • a placement of the packaging (2) at a temperature corresponding to the temperature of the lookup table (14);
  • a measurement of the output voltage (Vout) of the Wheatstone bridge (6);
  • a placement of the value of the variable resistance (R3) at a value associated with the temperature such that the output voltage (Vout) is equal to a reference voltage threshold (Vref) corresponding to a normal operating state of the battery cell (3); and
  • a recording, in the lookup table (14), of the value associated with the temperature; and

- a recording, in the memory (11) of the device, of the lookup table (14).

FIG. 1

EP2

R5

SP2

R3b    R3    R3a        R4

FIG. 2

## RÉFÉRENCES CITÉES DANS LA DESCRIPTION

**Documents brevets cités dans la description**

- CN 112763136 A
- DE 102017108708 A1
- US 3130578 A